(19) Europäisches Patentamt
European Patent Office
Office européen des brevets

(11) **EP 4 516 640 B1**

(12) **EUROPEAN PATENT SPECIFICATION**

(45) Date of publication and mention
of the grant of the patent:
**22.04.2026 Bulletin 2026/17**

(51) International Patent Classification (IPC):
**B62D 12/00** *(2006.01)* **B62D 6/00** *(2006.01)*

(52) Cooperative Patent Classification (CPC):
**B62D 12/00; B62D 6/002**

(21) Application number: **23193771.5**

(22) Date of filing: **28.08.2023**

(54) **CONTROL OF ARTICULATED VEHICLE**

STEUERUNG EINES GELENKFAHRZEUGS

COMMANDE DE VÉHICULE ARTICULÉ

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**05.03.2025 Bulletin 2025/10**

(73) Proprietor: **Volvo Construction Equipment AB**
**631 85 Eskilstuna (SE)**

(72) Inventors:
• **BOSTRÖM, Anders**
**355 95 TÄVELSÅS (SE)**
• **STRANDBERG, Gustav**
**352 59 VÄXJÖ (SE)**

(74) Representative: **Ström & Gulliksson AB**
**P.O. Box 4188**
**203 13 Malmö (SE)**

(56) References cited:
**US-A1- 2016 002 885 US-A1- 2016 280 260**
**US-A1- 2020 056 348**

## Description

## TECHNICAL FIELD

The disclosure relates generally to steering control of vehicles. In particular aspects, the disclosure relates to control of an articulated vehicle. The disclosure can be applied to heavy-duty vehicles, such as trucks and construction equipment, among other vehicle types. Although the disclosure may be described with respect to a particular vehicle, the disclosure is not restricted to any particular vehicle.

## BACKGROUND

Articulated vehicles with permanent articulation are common in some heavy-duty applications such as off-road vehicles, e.g. articulated haulers, articulated dump trucks etc. Unlike traditional heavy-duty vehicles, such as tractors, rigid lorries or straight trucks, which have a rigid frame connecting the cab and the vehicle body, articulated vehicles feature a permanent pivot joint that allows the front and rear sections of the vehicle to articulate independently around the pivot joint. This unique construction gives them exceptional maneuverability and stability, making them well-suited for navigating rough and uneven surfaces while carrying heavy loads.

US 2016/280260 discloses an active steering system for an articulated bus.

## SUMMARY

According to a first aspect of the disclosure, a computer system comprising processing circuitry is presented. The processing circuitry is configured to obtain an articulation angle of an articulated vehicle and a velocity of the articulated vehicle, wherein the articulation angle is controlled by a steering input unit, SIU, of a steering system of the articulated vehicle. The processing circuitry is further configured to, responsive to the articulation angle deviating from 0°, determine an angular speed for controlling the articulation angle towards 0° based on the articulation angle and a magnitude of the velocity such that a direction of the velocity is maintained and determine a steer-to-center torque for controlling the articulation angle towards 0° based on the angular speed. The processing circuitry is further configured to provide the steer-to-center torque to the steering system for control of the articulation angle. The first aspect of the disclosure may seek to improve difficulties in manually operating an articulated vehicle. A technical benefit may include improved stability as steer-to-center helps to improve the overall stability and control of the articulated vehicle. After completing a turn, the SIU naturally returns to the center position without altering a direction of the vehicle, which can reduce the chances of oversteering or understeering, thereby making the vehicle easier to handle. The operation of the articulated vehicle is simplified reducing training required by operators.

Optionally in some examples, including in at least one preferred example, the SIU is a SIU of the articulated vehicle. A technical benefit may include permitting local operators at the articulated vehicle to have the SIU automatically returned to the center, the driver experiences less effort and fatigue during long drives and repetitive maneuvers. Further to this, having the SIU being a SIU of the articulated vehicle allows for greater range of the articulated vehicle and decreases sensitivity to connectivity issues.

Optionally in some examples, including in at least one preferred example, the steering system is a steer-by-wire, SbW, steering system. A technical benefit may include simplifying the steering of the articulated vehicle.

Optionally in some examples, including in at least one preferred example, the computer system comprises the steering system. A technical benefit may include allowing for more freedom in methods of controlling the articulation angle.

Optionally in some examples, including in at least one preferred example, the processing circuitry is further configured to control a haptic feedback of the SIU based on the steer-to-center torque. A technical benefit may include improved stability as steer-to-center helps improve the overall stability and control of the articulated vehicle. After completing a turn, the SIU naturally returns to the center position without altering a direction of the vehicle, which can reduce the chances of oversteering or understeering, making the vehicle easier to handle. The operation of the articulated vehicle is simplified reducing training required by operators.

Optionally in some examples, including in at least one preferred example, the processing circuitry is further configured to control a hydraulic steering actuator of the steering system based on the steer-to-center torque. A technical benefit may include allowing the hydraulic steering actuator to return to center as hydraulic steering actuators have no inherent function of returning to zero.

Optionally in some examples, including in at least one preferred example, the processing circuitry is further configured to obtain a wanted articulation angle of the articulated vehicle, from the SIU, and determine a wanted articulation torque for controlling the articulation angle towards the wanted articulation angle. A technical benefit may include allowing control also of the articulated vehicle based on operator input.

Optionally in some examples, including in at least one preferred example, the processing circuitry is further configured to control the articulation angle by applying the wanted articulation torque and the steer-to-center torque to a steering actuator of the steering system. A technical benefit may include permitting direct control of the articulation angle allowing smooth and controlled steer-to-center functionality.

Optionally in some examples, including in at least one preferred example, the computer system further comprises the steering system, wherein the SIU is a SIU of the articulated vehicle, the steering system is a steer-by-wire, SbW, steering system, wherein the processing circuitry is further configured to: control a haptic feedback of the SIU based on the steer-to-center torque; control a hydraulic steering actuator of the steering system based on the steer-to-center torque; obtain a wanted articulation angle of the articulated vehicle, from the steering input unit, SIU, and determine a wanted articulation torque for controlling the articulation angle towards the wanted articulation angle; and control the articulation angle by applying the wanted articulation torque and the steer-to-center torque to a steering actuator of the steering system. A technical benefit may include all the benefits of the previous examples.

According to a second aspect of the disclosure, an articulated vehicle is presented. The articulated vehicle comprises a steering system and the computer system according to the first aspect. The second aspect of the disclosure may seek to provide a vehicle that reduces some if the difficulties in operating an articulated vehicle. A technical benefit may include improved stability as steer-to-center helps improve the overall stability and control of the articulated vehicle. After completing a turn, the SIU naturally returns to the center position without altering a direction of the vehicle, which can reduce the chances of oversteering or understeering, making the vehicle easier to handle. The operation of the articulated vehicle is simplified reducing training required by operators.

Optionally in some examples, including in at least one preferred example, the articulated vehicle is a heavy-duty vehicle.

Optionally in some examples, including in at least one preferred example, the steering system is a hydraulic steering system.

Optionally in some examples, including in at least one preferred example, the articulated vehicle is a SbW vehicle.

According to a third aspect of the disclosure, a computer implemented method is presented. The method comprises obtaining, by processing circuitry of a computer system, an articulation angle of an articulated vehicle and a velocity of the articulated vehicle, wherein the articulation angle is controlled by a SIU, of a steering system of the articulated vehicle. The method further comprises, responsive to the articulation angle deviating from 0°, determining, by processing circuitry of the computer system, an angular speed for controlling the articulation angle towards 0° based on the articulation angle and a magnitude of the velocity such that a direction of the velocity is maintained, and determining, by processing circuitry of the computer system, a steer-to-center torque for controlling the articulation angle towards 0° based on the angular speed. The method further comprises providing, by processing circuitry of the computer system, the steer-to-center torque to the steering system for control of the articulation angle. The third aspect of the disclosure may seek to improve difficulties in operating an articulated vehicle. A technical benefit may include improved stability as steer-to-center helps improve the overall stability and control of the articulated vehicle. After completing a turn, the SIU naturally returns to the center position without altering a direction of the vehicle, which can reduce the chances of oversteering or understeering, thereby making the vehicle easier to handle. The operation of the articulated vehicle is simplified reducing training required by operators.

According to a fourth aspect of the disclosure, a computer program product comprising program code for performing, when executed by a processing circuitry, the method of the third aspect.

According to a fifth aspect of the disclosure, a non-transitory computer-readable storage medium comprising instructions, which when executed by a processing circuitry, cause the processing circuitry to perform the method of the third aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

## BRIEF DESCRIPTION OF THE DRAWINGS

Examples are described in more detail below with reference to the appended drawings.

FIG. 1 is an exemplary schematic side view of an articulated vehicle according to an example.
FIG. 2A is an exemplary block diagram of an articulated vehicle according to an example.
FIG. 2B is an exemplary block diagram of an articulated vehicle according to an example.
FIG. 3A is an exemplary schematic top view of an articulated vehicle according to an example.
FIG. 3B is an exemplary schematic top view of an articulated vehicle according to an example.
FIG. 4 is an exemplary system architecture of a steering centerer according to an example.
FIGs. 5A-C are exemplary schematic top views illustrating maneuvering of an articulated vehicle according to an example.
FIGs. 6A-C are exemplary schematic top views illustrating maneuvering of an articulated vehicle according to an example.

FIG. 7 are exemplary time series plots of data relating to control of an articulated vehicle according to an example.

FIG. 8 are exemplary time series plots of data relating to control of an articulated vehicle according to an example.

FIG. 9 is an exemplary block diagram of a computer system according to an example.

FIG. 10 is an exemplary flow chary of a method according to an example.

FIG. 11 is an exemplary schematic view of a processing circuitry according to an example.

FIG. 12 is a schematic view of a computer program product according to an example.

FIG. 13 is a schematic diagram of an exemplary computer system for implementing examples disclosed herein, according to an example.

## DETAILED DESCRIPTION

The detailed description set forth below provides information and examples of the disclosed technology with sufficient detail to enable those skilled in the art to practice the disclosure.

Operating articulated vehicles, whether heavy-duty articulated trucks or heavy-duty articulated vehicles with permanent articulation, comes with its set of challenges. These challenges can vary depending on the type of vehicle, the environment, and the specific tasks involved. While articulated vehicles are designed to have improved maneuverability, articulated vehicles may still be challenging to handle, especially in tight spaces or congested urban areas. An operator of an articulated vehicle must be adept at managing the articulation joint. This requires precise control to ensure smooth movements and prevent any sudden shifts that could lead to instability or accidents. The operator must be skilled in navigating through narrow roads, making turns, and avoiding obstacles without causing damage to the vehicle or surroundings. Many articulated vehicles are designed for off-road use, where the terrain may be uneven, slippery, or unpredictable. Operators must be familiar with off-road driving techniques and have a good understanding of the vehicle's capabilities in such environments. Operating articulated vehicles with permanent articulation requires specialized training. The unique steering and maneuvering characteristics of these vehicles demand skilled and experienced operators. Inadequate training may lead to accidents, reduced efficiency, and increased wear and tear.

The present disclosure will provide functions, features and examples that may simplifies operation of an articulated vehicle. Specifically, steer-to-center (StC) functionality of articulated vehicles may be provided in a way that offers operation of an articulated vehicle that is similar to that of a conventional (rigid) vehicle, i.e. a vehicle with Ackermann steering. One effect may be a reduced need of operator training, decreased risk of accidents and improved precision in steering of the articulated vehicle.

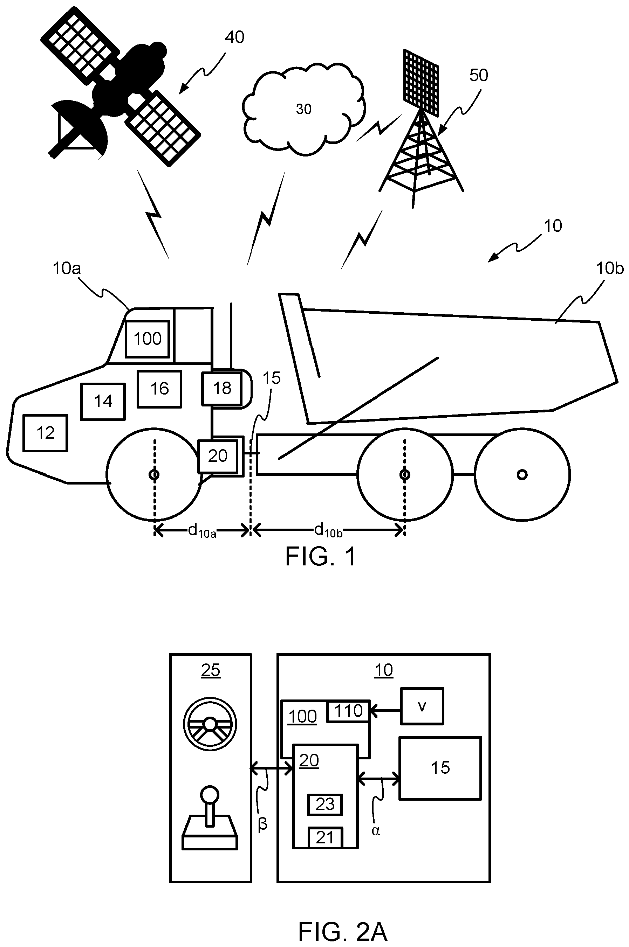

In **FIG. 1,** a planar side view of an exemplary articulated vehicle **10** according to the present disclosure is shown. The vehicle **10** in **FIG. 1** is a heavy-duty vehicle in the form of an articulated hauler, sometimes referred to as an articulated dump truck (ADT). This is one example chosen to illustrate an articulated vehicle **10** according to the disclosure and other types of articulated vehicles are equally compatible with the teachings of the present disclosure. Other articulated vehicles may be exemplified by, but not limited to, articulated trucks, articulated loaders, articulated buses, articulated trams, articulated cranes, articulated mobile elevated work platforms (MEWP) etc. The articulated vehicle **10** comprises a tractor unit (pull unit i.e. the front cab/section of the articulated hauler) **10a** and a trailing unit **10b** (i.e. the dump body of the articulated hauler). The pull unit **10a** and the trailing unit **10b** are pivotally connected at an articulation joint **15.** The articulation joint **15** allows pull unit **10a** and the trailing unit **10b** of the vehicle **10** to pivot relative to each other about a vertical axis when the ground surface is perfectly flat/horizontal.

The articulated vehicle **10** further comprises all vehicle units and associated functionality to operate as expected, such as a powertrain, chassis, and various control systems. The vehicle **10** comprises one or more propulsion sources **12.** The propulsion source **12** may be any suitable propulsion source **12** exemplified by, but not limited to, one or more or a combination of an electrical motor, an internal combustion engine such as a diesel, gas or gasoline powered engine. The articulated vehicle **10** further comprises an energy source **14** suitable for providing energy for the propulsion source **12.** That is to say, if the propulsion source **12** is an electrical motor, a suitable energy source **14** would be a battery or a fuel cell. The articulated vehicle **10** further comprises sensor circuitry **16** arranged to detect, measure, sense or otherwise obtain data relevant for operation of the articulated vehicle **10.** The sensor circuitry **16** may comprise one or more of an accelerometer, a gyroscope, a wheel Speed Sensor, an ABS sensor, a throttle position sensor, a fuel level sensor, a temperature Sensor, a pressure sensor, a rain sensor, a light sensor, proximity sensor, a lane departure warning sensor, a blind spot detection sensor, a TPMS sensor etc. The data relevant for operation of the articulated vehicle **10** may include, but is not limited to, one or more of a speed of the articulated vehicle **10,** a weight of the articulated vehicle **10,** an inclination of the articulated vehicle **10,** a status of the energy source **14** of the articulated vehicle **10** (state of charge, fuel level etc.), a presence of road users in a vicinity of the articulated vehicle **10,** a current speed limit of a current road travelled by the articulated vehicle **10,** an articulation angle of the articulated vehicle **10** etc.

The articulated vehicle **10** may in some examples comprise communications circuitry **18** configured to receive and/or send data. The articulated vehicle **10** may be in operative communication with external devices, such as external computer systems **30,** exemplified by a cloud server in **FIG. 1.** The connection to the external devices may be provided by e.g. the communications circuitry **18.** The articulated vehicle 10 may communicate with the cloud server **30** directly or via a communications interface such as a cellular communications interface **50,** such as a radio base station. The cloud server **30** may be any suitable cloud server exemplified by, but not limited to, Amazon Web Services (AWS), Microsoft Azure, Google Cloud Platform (GCP), IBM Cloud, Oracle Cloud Infrastructure (OCI), DigitalOcean, Vultr, Linode, Alibaba Cloud, Rackspace etc. The communications interface may be a wireless communications interface exemplified by, but not limited to, Wi-Fi, Bluetooth, Zigbee, Z-Wave, LoRa, Sigfox, 2G (GSM, CDMA), 3G (UMTS, CDMA2000), 4G (LTE), 5G (NR) etc. The articulated vehicle **10** may further be operatively connected to a Global Navigation Satellite System (GNSS) **40** exemplified by, but not limited to, global positioning system (GPS), Globalnaya Navigatsionnaya Sputnikovaya Sistema (GLONASS), Galileo, BeiDou Navigation Satellite System, Navigation with Indian Constellation (NavIC) etc. The vehicle 10 may be configured to utilize data obtain from the GNSS **40** to determine a geographical location of the vehicle **10.**

The articulated vehicle **10** further comprises a steering system **20** and a computer system **100.**

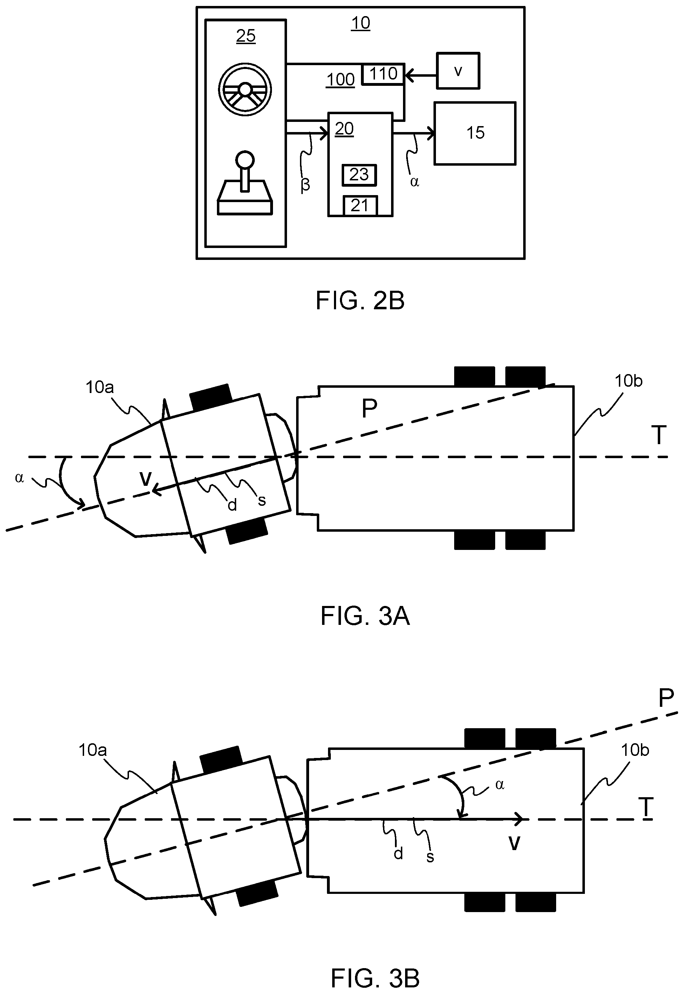

As seen on the exemplary block diagram of an articulated vehicle **10** in **FIG. 2A,** and **FIG. 2b,** the computer system **100** comprises processing circuitry **110.** Further, the steering system **21** comprises processing circuitry **21.** The processing circuitry **21** of the steering system **20** may be part of the processing circuitry **110** of the computer system **100.** The computer system **100** may comprise the steering system **20.** The steering system **20** is configured to control steering of the articulated vehicle **10,** i.e. to control an articulation angle $\alpha$ of the articulation joint **15** based on a wanted (i.e. desired) articulation angle $\beta$. The wanted articulation angle $\beta$ is provided by a steering input unit (SIU) **25** operatively connected to the steering system **20.** In detail, the wanted/desired articulation angle $\beta$ evolves proportionally with a position of the SIU **25,** and more precisely to the deviation of the position of the SIU **25** relative to a neutral/straight position of the SIU **25.** As a result, if the SIU **25** has been operated to its maximum limit relative to the neutral/center position, then the wanted/desired articulation angle $\beta$ corresponds to a maximum allowable articulation angle. Similarly, if the SIU **25** has been moved halfway, e.g. at mid-course, then the wanted articulation angle $\beta$ is equal to half of the maximum allowable articulation angle (according to proportionality law). The SIU **25** may be a remotely located SIU **25** for remote control of the articulated vehicle **10.** However, as seen in **FIG. 2B,** the SIU **25** may also be part of the articulated vehicle **10.** The SIU **25** may any suitable device such as a steering wheel, a joystick, keyboard etc. In some examples, no mechanical connection is provided between the SIU **25** and the articulation joint **15,** this is generally known as a steer by wire (SbW) system. Due to the complexity of steering systems for articulated vehicles **10,** the steering is generally provided by a SbW system.

The steering system **20** may control the articulation angle $\alpha$ in one or more different ways. The articulation angle $\alpha$ may be controlled by a steering actuator **23** of the steering system **20.** The steering actuator **23** may be a hydraulic steering actuator comprising a hydraulic system arranged to control movement of the articulation angle $\alpha$. In a hydraulic steering actuator, hydraulic cylinders are connected to the articulation joint **15** and provide required force to articulate the articulated vehicle **10.** By controlling the flow of hydraulic fluid to the cylinders, the operator may adjust the articulation angle $\alpha$. The steering actuator **23** may be a differential steering actuator configured to adjust a relative speed of wheels on a left and right sides of the articulation joint **15.** The steering actuator **23** may be an electrical steering actuator comprising electric motors arranged to control movement of the articulation angle $\alpha$. The examples of steering actuators **23** are given as way of example and should not be considered exhaustive.

With reference to **FIG. 3A** and **FIG. 3B,** some definitions relevant for the present disclosure will be provided. **FIG. 3A** is a top view of an articulated vehicle **10** moving in a (forward) direction **d** with a speed **s.** The speed **s** and the direction **d** are indicated by a velocity **v.** Generally, the velocity **v** is a vector having the direction **d** and having a magnitude describing the speed **s.** However, for examples of the present disclosure, the velocity **v** need only contain a speed **s** (a magnitude of the velocity **v**) and a direction indicator indicating a forward or a backwards direction of the articulated vehicle **10.** That is to say, the direction **d** does not have to be a direction in a plane. In **FIG. 3A,** the tractor unit **10a** of the articulated vehicle **10** is the forward one (leading unit) of the tractor unit **10a** and the trailing unit **10b.** As the vehicle is an articulated vehicle **10,** the forward one of the tractor unit **10a** and the trailing unit **10b** is oriented in the direction d of the velocity **v.** This is indicated in **FIG. 3A** by a tractor unit axis **P** coinciding with the direction **d** of the velocity **v.** However, the articulated vehicle **10** in **FIG. 3A** is turning to the left which is visualized by a trailing unit axis **T** being different from the tractor unit axis **P.** The articulation angle $\alpha$ is formed between the trailing unit axis **T** and the tractor unit axis **P.** To clarify, in **FIG. 3B,** the same articulated vehicle **10** as in **FIG. 3A** is shown, but **FIG. 3B,** the articulated vehicle is reversing. This means that, in **FIG. 3B,** the trailing unit **10b** is the forward one (leading unit) of the tractor unit **10a** and the trailing unit **10b.** This is indicated in **FIG. 3B** by the trailing unit axis **T** coinciding with the direction **d** of the velocity **v.** The articulation angle $\alpha$ is formed between the tractor unit axis **P** and the trailing unit axis **T.**

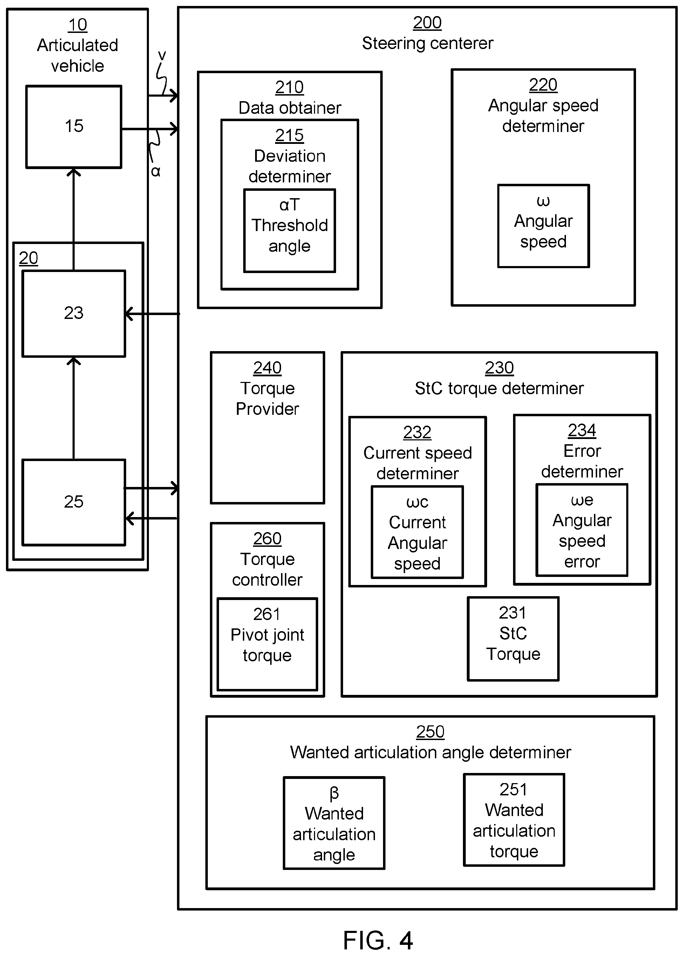

In **FIG. 4,** a system diagram of a steering centerer **200** for an articulated vehicle **10** is shown. The steering centerer **200** is advantageously implemented in software and the different functions and features described may be performed by the processing circuitry **110** of the computer system **100,** and/or the processing circuitry **21** of the steering system **20.** The steering centerer **200** may, in some examples, be configured to operate between the steering system **20** and the steering actuator **23** operating on data to/from the steering actuator **23.** In some examples, the steering centerer **200** is configured to operate between the steering system **20** and the SIU **25** operating on data to/from the SIU **25.** In some examples, the steering centerer **200** is configured to operate in parallel with, or as part of, the steering system **20** such that it may operate both on data to/from the SIU **25** and on data to/from the steering actuator **23.**

The steering centerer **200** comprises a data obtainer/collector **210** configured to obtain/collect the articulation angle α of the articulated vehicle **10** and the velocity v of the articulated vehicle **10.** The articulation angle α may be provided by sensor circuitry **16** configured to measure, detect or otherwise obtain data relating to the articulation joint **15.** In some examples, wherein an input angle indicated by SIU **25** correlates (is proportional) to the articulation angle α, i.e. each angle of the SIU **25** is equal to an articulation angle α multiplied by some steering wheel ratio. In such examples, the articulation angle α may be provided by sensor circuitry **16** which is configured to measure, detect or otherwise obtain data relating to the wanted articulation angle β. The velocity **v** may be provided by sensor circuitry **16** which is configured to measure, detect or otherwise obtain data relating to the propulsion of the vehicle **10.** It should be mentioned that the data obtainer **210** may be configured to obtain the velocity **v** by obtaining a speed s of the vehicle, the articulation angle α and data (from e.g. a gearbox of the vehicle **10**) indicating if the vehicle **10** is moving forward or reversing. Data indicating if the vehicle **10** is moving forward or reversing may be provided by indicating a gear of the vehicle **10,** which one is a forward one of the tractor unit **10a** or the trailing unit **10b** or by a simple indicator.

The data obtainer **210** comprises a deviation determiner **215.** The deviation determiner **215** is configured to determine if the articulation angle α deviates from 0°. Generally, if the articulation angle α is substantially 0°, there is no need to perform further functionality of the steering centerer **200** and in some examples, the data obtainer **210** obtains the articulation angle α and only if the deviation determiner **215** determines that the articulation angle α deviates from 0° is the velocity **v** obtained. In some examples the deviation determiner **215** determines that the articulation angle α deviates from 0° if the articulation angle α deviates from 0° by more than a predetermined threshold angle αT. The threshold angle αT may depend on a speed s of the articulated vehicle **10** or be a constant threshold angle αT. In some examples the threshold angle αT is below 5°, in some examples the threshold angle αT is below 3° and in some examples the threshold angle αT is below 1,5°.

The steering centerer **200** further comprises an angular speed determiner **220.** The angular speed determiner/calculator **220** is configured to determine/calculate a wanted/desired angular speed ω for controlling the articulation angle α of the articulated vehicle **10** towards 0°. The wanted/desired angular speed ω is determined based on the articulation angle α and the speed **s,** i.e. a magnitude of the velocity **v** such that a direction **d** of the velocity **v** is maintained. The angular speed ω may be determined as [ω = f(α, s, d)], *subject to d = constant.*

As the direction **d** is to be maintained, this means (this will be explained in further detail in later sections) that the rear one of the tractor unit **10a** and the trailing unit **10b** should follow, substantially, track in track with the forward one of the tractor unit **10a** and the trailing unit **10b.** The angular speed determiner **220** may be configured to determine the angular speed ω only if the deviation determiner **215** determines that the articulation angle α deviates from 0°.

The steering centerer **200** further comprises a StC torque determiner **230.** The StC torque determiner **230** is configured to determine a StC torque **231** for controlling the articulation angle α towards 0° based on the angular speed ω determined by the angular speed determiner **220.** In other words, the StC torque **231** is determined so as to decrease the articulation angle towards 0° at a specific angular speed corresponding to the angular speed ω. The StC torque determiner **230** may be implemented as a control loop (closed loop control). To this end, the StC torque determiner **230** may comprise a current/actual angular speed determiner **232,** or current speed determiner **232** for short. The current angular speed determiner **232** may be configured to determine a current/real/actual angular speed ωc by dividing a difference between two articulation angles α with a difference in time between the two articulation angles α. The StC torque determiner **230** may further comprise an angular speed error determiner **234,** or error determiner **234** of short. The angular speed error determiner **234** may be configured to determine an angular speed error ωe by comparing the current angular speed ωc to the wanted/target angular speed ω determined by the angular speed determiner **220.** If the current angular speed ωc is equal to the angular speed ω determined by the angular speed determiner **220,** i.e. the angular speed error ωe is substantially zero, the StC torque **231** is not changed. If the current angular speed ωc is greater than the angular speed ω determined by the angular speed determiner **220,** i.e. the angular speed error ωe is positive, the StC torque **231** is decreased. If the current angular speed ωc is lower than the angular speed ω determined by the angular speed determiner **220,** i.e. the angular speed error ωe is negative, the StC torque **231** is increased. The StC torque **231** may be limited to a maximum StC torque to ensure that it does not reach too high values.

The steering centerer **200** further comprises a torque provider **240** configured to provide the StC torque **231** for control of the articulation angle α. Control of the articulation angle α may be performed in different ways and will be further explained in later sections. The torque provider **240** may provide the StC torque **231** to the steering system **20** of the articulated vehicle **10**. The torque provider **240** may provide the StC torque **231** for further processing by e.g. the computer system **100** or other functions or features of the steering centerer **200**.

Optionally, the steering centerer **200** may be configured to also consider the wanted articulation angle β. To this end, the data obtainer **210** may be configured to further obtain the wanted articulation angle β from the SIU **25**. The steering centerer **200** may further comprise a wanted articulation angle determiner **250**. In some examples, the data obtainer **210** may be configured to further obtain a SIU angle or deviation from the SIU **25** and the wanted articulation angle determiner **250** may be configured to determine the wanted articulation angle β based on the SIU angle and a steering ratio associated with the SIU **25**. The wanted articulation angle determiner **250** is configured to determine a wanted articulation torque **251** based on the wanted articulation angle β. The torque provider **240** may further be configured to provide the wanted articulation torque **251** to the steering system **20** of the articulated vehicle 10. The torque provider **240** may provide the wanted articulation torque **251** for further processing by e.g. the computer system **100** or other functions or features of the steering centerer **200**.

In some optional examples, the steering centerer **200** further comprises a torque controller **260**. The torque controller **260** is configured to control (or cause control of) a pivot joint torque **261** to control the articulation angle α of the articulated vehicle **10**. The torque controller **260** is configured to control the pivot joint torque **261** based on the StC torque **231**. In some examples, the Pivot joint torque **261** is controlled based on the wanted articulation angle β, which may be provided by the SIU **25,** and the StC torque **231** may be applied to the SIU **25.** In examples wherein the wanted articulation torque **251** is determined by the wanted articulation angle determiner **250**, the torque controller **260** may be configured to control the pivot joint torque **261** also based on the wanted articulation torque **251**. It may very well be that the wanted articulation torque **251** is a torque with an opposite direction than the StC torque **231**. Depending on the magnitudes of the wanted articulation torque **251** and the StC torque **231** and how the torque controller **260** is configured to control the articulation angle α, pivot joint torque **261** may be the wanted articulation torque **251,** the StC torque **231** or a combination (e.g. sum or difference) of the wanted articulation torque **251** and the StC torque **231.**

Depending on how the steering centerer **200** is configured, i.e. which features of the steering system **20** or the SIU **25** the steering centerer **200** is configured to control, the torque controller **260** may control the pivot joint torque **261** differently.

The torque controller **260** may control the pivot joint torque **261** by controlling the steering actuator **23** to exert the pivot joint torque **261**. Assuming that the SIU **25** is a keyboard no SIU angle is indicated by a position of the SIU **25** and no feedback from the steering system **20** to the SIU **25** is required. However, if the SIU **25** is a steering wheel, a joystick or any other device configurable to indicate a steering angle, the steering angle of the SIU **25** may be updated to reflect the change in articulation angle α. To this end, the steering system **20** may detect a change in articulation angle α and control the SIU **25** to reflect this change, assuming that the SIU **25** is configurable to provide haptic feedback to the operator/driver.

The torque controller **260** may control the pivot joint torque **261** by controlling a haptic feedback exerted by the SIU **25**. The exerted haptic feedback causes the steering angle indicated by the SIU **25** to change. The steering system **20** may detect the change in steering angle indicated by the SIU **25** and control the steering actuator **23** to exert a torque corresponding to the torque indicated by the SIU **25**.

The torque controller **260** may control the pivot joint torque **261** by controlling a haptic feedback exerted by the SIU **25** to correspond to the pivot joint torque **261** and control the steering actuator **23** to exert the pivot joint torque **261**.

In the examples of the torque controller **260** presented above, control of the pivot joint torque **261** based on the wanted articulation torque **251** may be provided either by the steering system **20** or the steering centerer **200**. The skilled person appreciates that flexibility of implementing the steering centerer **200** and understands, after reading the present disclosure, how to control of the pivot joint torque **261** also based on the wanted articulation torque **251**.

The StC torque **231** determined as taught herein, i.e. based on the angular speed ω, allows the articulated vehicle **10** to keep moving along the same axis **P, T** responsive to an operator not applying any torque, or otherwise providing input to, the SIU **25**. This means that, at any given point in time, rear one of the tractor unit **10a** and the trailing unit **10b** should be steered such that, when the wheels of the rear one of the tractor unit **10a** and the trailing unit 10b reach the position at which the pivot joint **15** was at the given point in time, the articulation angle α should be zero. This will be further exemplified in the following.

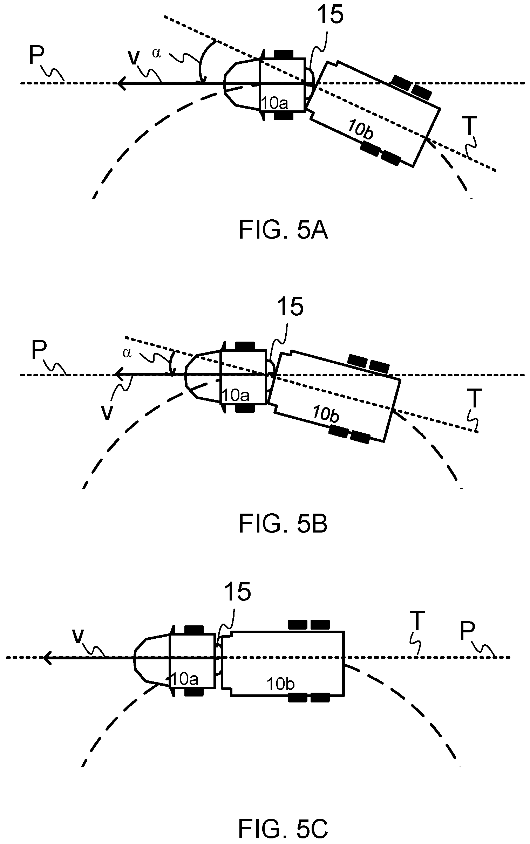

With reference to **FIG. 5A, FIG. 5B** and **FIG. 5C,** one effect of the present disclosure will be explained. **FIG. 5A, FIG. 5B** and **FIG. 5C** show a top view of the same articulated vehicle **10** at three different points in time. At a first point in time, **FIG. 5A,** an operator of the articulated vehicle **10** releases a grip of a SIU **25** controlling the steering system **20** of the articulated vehicle **10**. This means that the articulated vehicle **10** according to the disclosure will straighten up and follow the tractor unit axis **P**. The speed **s** and the articulation angle α of the articulated vehicle **10** are obtained as mentioned in reference to **FIG. 4**. The angular speed ω is determined such that the direction **d** of the tractor unit **10a** is maintained. This means that the articulation angle α should be zero when the articulated vehicle **10** has moved sufficiently forward such that the wheels of the trailer unit **10b** are at a position where the pivot joint **15** is located in **FIG. 5A.** Assuming that a distance **d$_{10b}$** (see **FIG. 1**) from a forward one of wheel axis of the trailing unit **10b** to the pivot joint **15** is known, a time **t** it takes for the forward one of wheel axis of the trailing unit **10b** to reach the pivot joint **15** location in **FIG. 5A** may be estimated as $t = \frac{d_{10b}}{s}$. From this, the angular speed ω may be determined as $\omega = \frac{\alpha}{t}$. Such an approximation of the angular speed ω is sufficiently accurate assuming that new calculations of the angular speed ω are made sufficiently often. If fewer calculations are made, the distance travelled by the trailing unit **10b** between calculations may be considered an arc-shaped path of the trailing unit **10b,** to increase accuracy. In such situations, the time **t** it takes for the forward one of wheel axis of the trailing unit **10b** to reach the pivot joint **15** location in **FIG. 5A** may be estimated as $t = \frac{2\pi}{\alpha} \cdot \frac{2 \cdot \pi \cdot d_{10b}}{s}$. The angular speed ω may be determined as indicated above. The StC torque **231** may be determined as explained in reference to **FIG. 4** and the pivot joint torque **261** may be controlled as explained in reference to **FIG. 4.** As a result, at a second point in time, **FIG. 5b,** the articulated vehicle **10** has moved a distance forward and the articulation angle α is reduced compared to the articulation angle α of **FIG. 5B.** However, the direction **d** is unchanged and the articulated vehicle **10** is moving along the same tractor unit axis **P** as in **FIG. 5A.** Assuming that the speed s is unchanged, the angular speed ω will decrease as the articulation angle α approaches zero and, when the articulation angle α is zero, see **FIG. 5C,** the angular speed ω will be zero. In **FIG. 5C,** the tractor unit axis **P** and the trailing unit axis **T** coincide.

In some examples, specifically advantageous for computer implemented examples, the direction **d** may be maintained, i.e. kept constant, between consecutive discrete time points (samples) such that $d(n) = d(n + 1)$ where n is a discrete time point with sample time T$_s$. From this, a time update of the direction may be expressed as $d(n + 1) = d(n) + T_s \cdot f(v, \alpha, \omega)$. As the direction **d** is kept constant and the sample time $T_s \neq 0$, $f(v, \alpha, \omega) = 0$ must be satisfied. From this, the wanted angular speed ω may be expressed as a function of the velocity **v** and the articulation angle α, $\omega = g(v, \alpha)$.

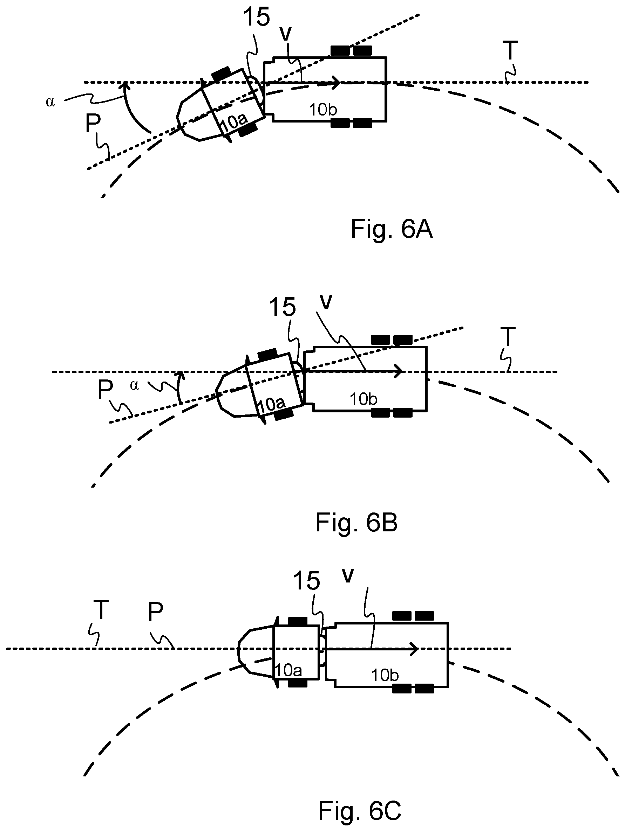

A corresponding example as the one presented with reference to **FIG. 5A, FIG. 5B** and **FIG. 5C** is shown in **FIG. 6A, FIG. 6B** and **FIG. 6C,** for a reversing articulated vehicle. At a first point in time, **FIG. 6A,** an operator of the articulated vehicle **10** lets go of (releases) a SIU **25** controlling the steering system **20** of the articulated vehicle **10.** This means that the articulated vehicle **10** according to the disclosure will straighten up and follow the trailing unit axis **T.** The angular speed ω is determined such that the direction **d** of the trailing unit **10b** is maintained. This means that the articulation angle α should be zero when the articulated vehicle **10** has moved sufficiently backwards such that the wheels of the tractor unit **10a** are at a position where the pivot joint **15** is located in **FIG. 6A.** Assuming that a distance **d$_{10a}$** (see **FIG.** 1) from a wheel axis of the tractor unit **10a** to the pivot joint **15** is known, a time **t** it takes for the wheel axis of the tractor unit **10a** to reach the pivot joint **15** location in **FIG. 6A** may be estimated as $t = \frac{d_{10a}}{s}$. The angular speed ω may be determined as presented in reference to s **FIG. 5A, FIG. 5B** and **FIG. 5C.** As above, the accuracy of the approximation may be increased by considering the arc-shaped path of the tractor unit **10a.** That is to say, the time **t** it takes for the wheel axis of the tractor unit **10a** to reach the pivot joint **15** location in **FIG. 6A** may be estimated as $t = \frac{2\pi}{\alpha} \cdot \frac{2 \cdot \pi \cdot d_{10a}}{s}$. The angular speed ω may be determined as presented above in the forward moving examples, e.g. in reference to **FIG. 5A, FIG. 5B** and **FIG. 5C.** The StC torque **231** may be determined as explained in reference to **FIG. 4** and the pivot joint torque **261** may be controlled as explained in reference to **FIG. 4.** As a result, at a second point in time, **FIG. 6b,** the articulated vehicle **10** has moved a distance backwards and the articulation angle α is reduced compared to the articulation angle α of **FIG. 6B.** However, the direction **d** is unchanged and the articulated vehicle **10** is moving along the same trailing unit axis T as in **FIG. 6A.** Assuming that the speed **s** is unchanged, the angular speed ω will decrease as the articulation angle α approaches zero and, when the articulation angle α is zero, see **FIG. 6C,** the angular speed ω will be zero. In **FIG. 6C,** the tractor unit axis **P** and the trailing unit axis **T** coincide.

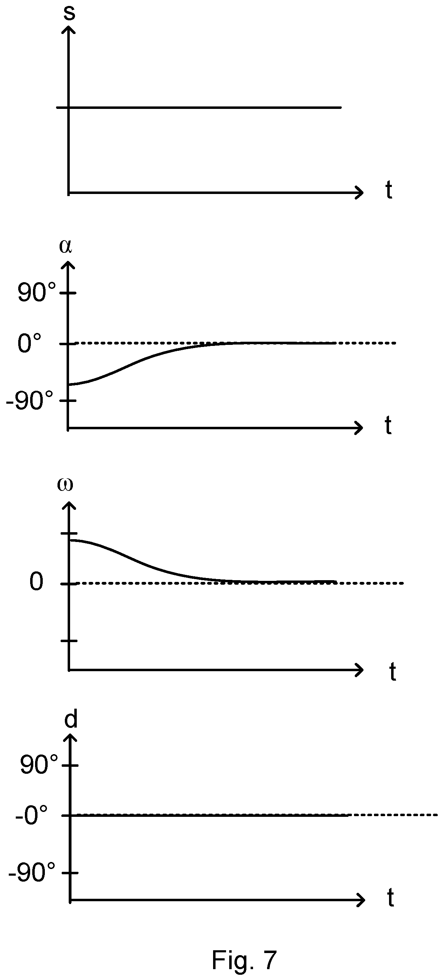

In **FIG. 7,** time series plots of the speed s of the articulated vehicle **10** (top graph), the articulation angle α (second graph from top), the angular speed ω (second graph from bottom) and the direction **d** of the articulated vehicle **10** (bottom graph) are shown along a common time axis t. The time series plots in **FIG. 7** may be interpreted as describing the maneuvering of the articulated vehicles **10** in **FIG. 5A, FIG. 5B** and **FIG. 5C** or in **FIG. 6A, FIG. 6B** and **FIG. 6C.** At the start of the time series plots, the SIU **25** is released and the articulation angle α is negative. As a result, a positive angular speed ω is determined that gradually decreases as the articulation angle α approaches zero. In the time series plots of **FIG. 7,** the speed s and the direction **d** of the articulated vehicle **10** are constant.

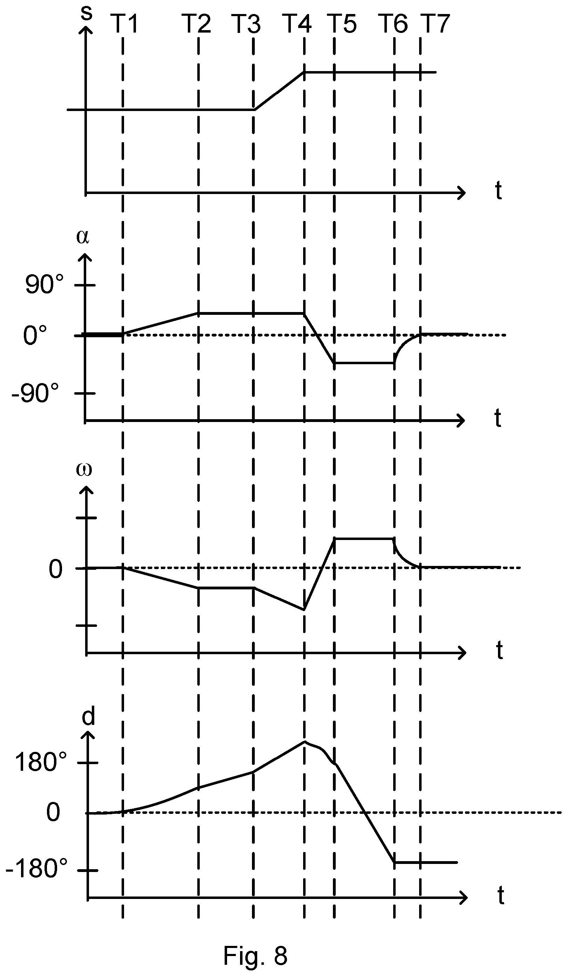

In **FIG. 8,** corresponding time series plots as those presented in **FIG. 7** are shown along a common time axis t. In **FIG. 8,** an operator of the articulated vehicle **10** performs some more maneuvering than the operator in **FIG. 7.** At a start of the time series plots in **FIG. 8,** the articulated vehicle is moving forward with an articulation angle $\alpha$ being substantially zero.

At a first point in time **T1,** the articulation angle $\alpha$ increases. This may be due to the operator controlling the SIU **25** to provide a wanted articulation angle $\beta$ changing the direction **d** positively. Responsive to the articulation angle $\alpha$ deviating from zero, a negative angular speed $\omega$ is applied to the steering system **20.** The angular speed $\omega$ increases in magnitude with the articulation angle $\alpha$. Assuming a steering wheel SIU **25** capable of providing haptic feedback to the operator, the operator will feel/experience the evolution of angular speed $\omega$ by the SIU **25** as being heavier/harder to rotate. This is similar to the operation of Ackermann steering where steering will be heavier/harder the more the wheel is turned.

At a second point in time **T2,** the operator stops rotating the SIU **25** and keeps it at a constant steering angle, thereby providing a constant wanted articulation angle $\beta$. As a result, the articulation angle $\alpha$ is constant and so is the angular speed $\omega$. As the articulation angle $\alpha$ is constant but non-zero, the direction **d** of the articulated vehicle **10** keeps changing at a constant pace.

At a third point in time **T3,** the operator accelerates the articulated vehicle **10** increasing the speed **s** of the articulated vehicle **10.** The articulation angle $\alpha$ is kept constant, but due to the increase in speed, the angular speed $\omega$ increases. As the operator accelerates, an increased torque will be exerted on the SIU **25** making it heavier/harder for the operator to maintain the constant steering angle and thereby provide a constant wanted articulation angle $\beta$. This is similar to the operation of Ackermann steering where steering will be heavier at increased speeds.

At a fourth point in time **T4,** acceleration of the articulated vehicle **10** is stopped and the speed **s** is kept constant. The operator rotates the SIU **25** in an opposite direction to before, changing the steering angle and thereby the wanted articulation angle $\beta$. The articulation angle $\alpha$ changes from positive to negative and the direction **d** of the articulated vehicle **10** starts to decrease. That is to say, the articulated vehicle **10** is starting to turn back. The angular speed $\omega$ tracks the articulation angle $\alpha$ and changes from negative to positive at a time the articulation angle $\alpha$ changes from positive to negative.

At a fifth point in time **T5,** the operator stops moving/rotating the SIU **25** and keeps the SIU **25** at a constant negative steering angle, thereby providing a constant negative wanted articulation angle $\beta$. As a result, the articulation angle $\alpha$ is constant and so is the angular speed $\omega$. As the articulation angle $\alpha$ is constant but non-zero, the direction **d** of the articulated vehicle 10 keeps changing at a constant pace.

At a sixth point in time **T6,** the operator releases the SIU **25.** The articulation angle $\alpha$ is controlled towards zero degrees at the angular speed $\omega$ and the SIU **25** is rotated to provide a zero steering angle and zero wanted articulation angle $\beta$. Already at the sixth point in time **T6,** the direction **d** of the articulated vehicle **10** is unchanged.

At a seventh point in time **T7,** the articulated vehicle **10** is controlled to continue at a constant direction **d** at a constant speed **s.**

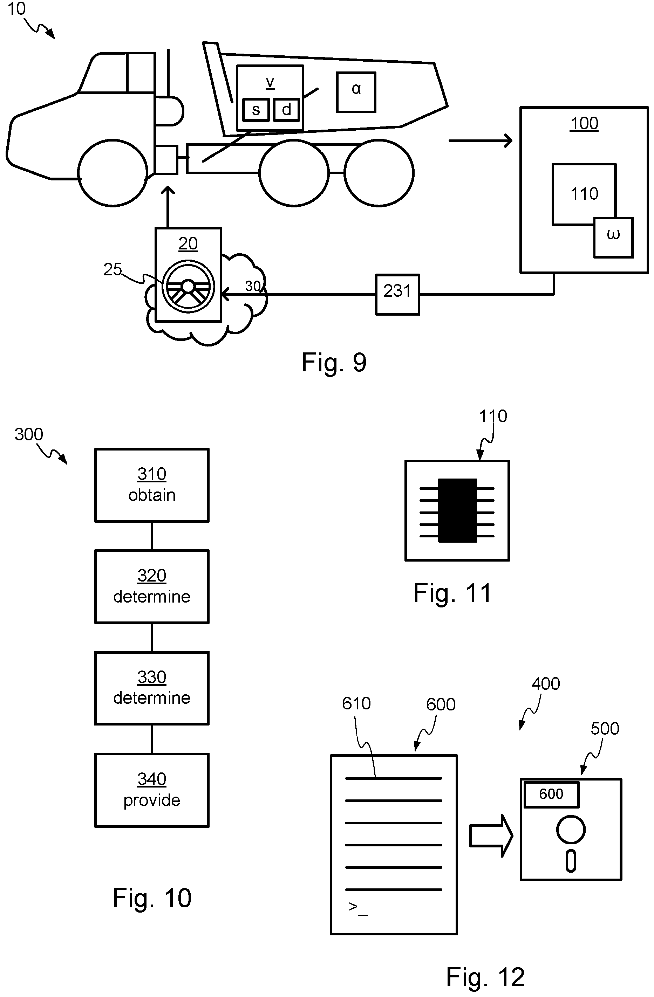

In **FIG. 9,** a computer system **100** comprising processing circuitry **110** is shown. The processing circuitry **110** is configured to obtain an articulation angle $\alpha$ of an articulated vehicle **10** and a velocity **v** of the articulated vehicle **10.** The articulation angle $\alpha$ is controlled by a SIU **25** of a steering system **20** of the articulated vehicle **10.** The processing circuitry **110** is further configured to, responsive to the articulation angle $\alpha$ deviating from 0°, determine an angular speed $\omega$ for controlling the articulation angle $\alpha$ towards 0° based on the articulation angle $\alpha$ and a magnitude **s** of the velocity **v** such that a direction **d** of the velocity **v** is maintained. The processing circuitry **110** is further configured to determine the steer-to-center torque **231** for controlling the articulation angle $\alpha$ towards 0° based on the angular speed $\omega$, and to provide the steer-to-center torque **231** to the steering system **20** for control of the articulation angle $\alpha$**.**

The StC functionality presented in the presented disclosure may replace the self-centering effect of for instance a car or any other vehicle with Ackermann steering. When a car is turning, and its steering wheel is released, it will continue travel in a straight line from where the steering wheel was released. The same effect is provided by examples of the present disclosure.

In steering systems **20** being configured as SbW systems, there is commonly another feedback torque used to dampen rotation based on an angular velocity of the SIU **25.** A problem is that the StC torque and the dampening torque are working against each other, that is to say if the dampening torque is increased, the StC will be slower. A case where this is problematic is when tuning these functions. If the dampening function is tuned, the StC will also need to be tuned. However, by calculating the angular velocity $\omega$ for articulation as taught herein, and controlling the pivot joint torque **261** to achieve the angular velocity $\omega$, this problem will not occur. Determining the angular velocity $\omega$ as taught herein improves the steer-to-center functionality, making it easier to tune and to achieve the desired behavior of the articulated vehicle **10.** The StC functionality further assists in keeping the articulated vehicle **10** stable when travelling straight (forward or backward).

The teachings of the present disclosure are specifically effective when an articulated vehicle **10** is tele-operated from e.g. a rig station. Together with the camera feed from cameras mounted on the articulated vehicle **10,** the StC torque **231** determined according to the present disclosure will assist the operator a lot, especially at low vehicle speeds s.

In **FIG. 9,** the steering system **20** is a remote steering system **20,** or at least the SIU **25** is a remote SIU. As mentioned, the steering system **20** and/or the SIU **25** may be comprised in the articulated vehicle **10.** Further to this, the articulated vehicle **10** may comprise the computer system **100** and/or the computer system **100** may comprise the steering system **20**. In some examples, the steering system **20** comprises the computer system **100**.

In **FIG. 10,** a method **300** is shown. The method **300** is for providing the StC torque **231** to the steering system **20** of an articulated vehicle **10**. The method **300** may be a computer implemented method **300**. In some examples the processing circuitry **110** of the computer system **100** may be configured to perform, or cause performance of, the method **300**. In some examples the processing circuitry **21** of the steering system **20** may be configured to perform, or cause performance of, the method **300**. In some examples the processing circuitry **110** of the computer system **100** and the processing circuitry **21** of the steering system **20** may be configured to co-operatively perform, or cause performance of, the method **300**.

The method **300** comprises obtaining **310** the articulation angle α of the articulated vehicle **10** and a velocity **v** of the articulated vehicle **10**. The articulation angle α is controlled by the SIU **25** of the steering system **20** of the articulated vehicle **10**. The obtaining **310** may be performed according to any example or function presented herein such as those introduced with reference to **FIG. 4.** The method **300** further comprises, responsive to the articulation angle α deviating from 0°, determining **320** the angular speed ω for controlling the articulation angle α towards 0° based on the articulation angle α and a magnitude s of the velocity **v** such that the direction **d** of the velocity **v** is maintained. Also, the determining **320** of the angular speed ω may be performed according to any example or function presented herein such as those introduced with reference to **FIG. 4.** The method **300** further comprises determining **330** the steer-to-center torque **231** for controlling the articulation angle α towards 0° based on/according to the angular speed ω. The determining **330** of the steer-to-center torque **231** may be performed according to any example or function presented herein such as those introduced with reference to **FIG. 4.** The method **300** further comprises providing **340** the steer-to-center torque **231** to the steering system **20** for control of the articulation angle α.

It should be mentioned that the method **300** in **FIG. 10** may be expanded to include any feature, function or example presented in the present disclosure.

In **FIG. 11** processing circuitry **110** is shown. The processing circuitry **110** may be configured to cause provisioning of the StC torque **231** to a steering system **20** of an articulated vehicle **10**. The processing circuitry **110** is configured to cause obtaining of the articulation angle α of the articulated vehicle **10** and a velocity **v** of the articulated vehicle **10**. The articulation angle α is controlled by the SIU **25** of the steering system **20** of the articulated vehicle **10**. The processing circuitry **110** is further configured to cause, responsive to the articulation angle α deviating from 0°, determining of the angular speed ω for controlling the articulation angle α towards 0° based on the articulation angle α and a magnitude **s** of the velocity **v** such that the direction **d** of the velocity **v** is maintained. The processing circuitry **110** is further configured to cause determining of the steer-to-center torque **231** for controlling the articulation angle α towards 0° based on/following the angular speed ω. The processing circuitry **110** is further configured to cause provisioning of the steer-to-center torque **231** to the steering system **20** for control of the articulation angle α.

The processing circuitry **110** may be further configured to cause any further feature, function or example presented in the present disclosure.

In **FIG. 12** a computer program product **400** is shown. The computer program product **400** comprises a computer program **600** and a non-transitory computer readable medium **500**. The computer program **600** may be stored on the computer readable medium **500**. The computer readable medium **500** is, in **FIG. 12,** exemplified as a vintage 5,25" floppy disc, but may be embodied as any suitable non-transitory computer readable medium such as, but not limited to, hard disk drives (HDDs), solid-state drives (SSDs), optical discs (e.g., CD-ROM, DVD-ROM, CD-RW, DVD-RW), USB flash drives, magnetic tapes, memory cards, Read-Only Memories (ROM), network-attached storage (NAS), cloud storage etc.

The computer program **600** comprises instruction **610** e.g. program instruction, software code, that, when executed by processing circuitry cause the processing circuitry to perform the method **300** introduced herein with reference to **FIG. 10.**

It should be mentioned that StC functionality presented herein may be provided substantially continuously. However, in some examples, the StC functionality of the present disclosure may be selectively activated by e.g. an operator pressing a button, toggling a switch or the like. The selective activation is specifically advantageous in examples wherein the SIU 25 lacks haptic feedback as this then allows an operator to decide when the vehicle **10** is to maintain the current direction **d.**

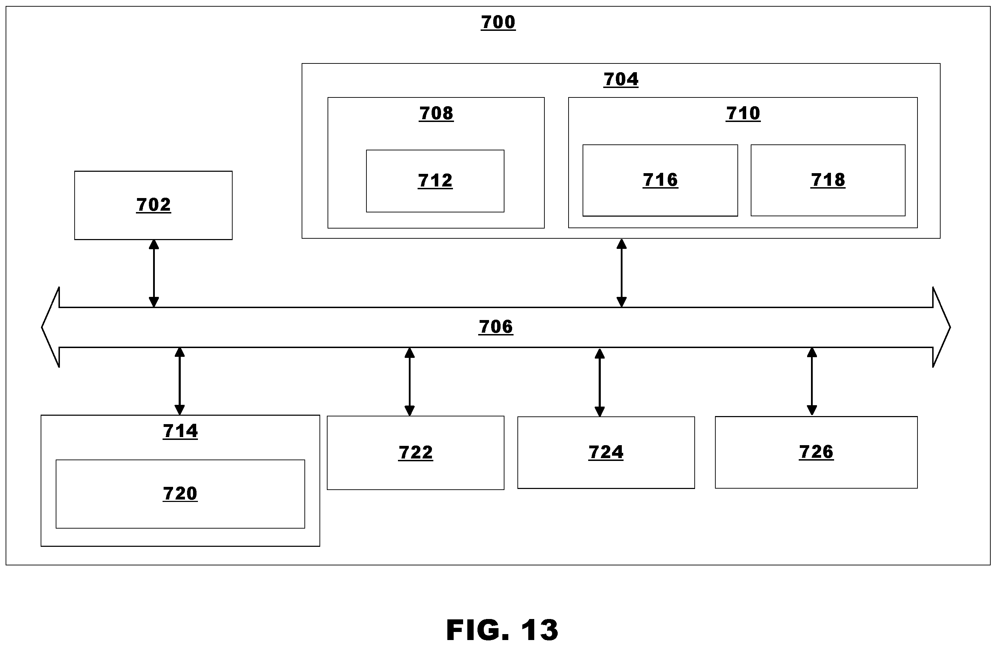

**FIG. 13** is a schematic diagram of a computer system **700** for implementing examples disclosed herein. The computer system **700** is adapted to execute instructions from a computer-readable medium to perform these and/or any of the functions or processing described herein. The computer system **700** may be connected (e.g., networked) to other machines in a LAN, an intranet, an extranet, or the Internet. While only a single device is illustrated, the computer system **700** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system **100** may be the computer system **100** introduced with reference to **FIG. 1**. The computer system **700** may include processing circuitry **702** (e.g., processing circuitry including one or more processor devices or control units), a memory **704,** and a system bus **706**. The computer system **700** may include at least one computing device having the processing circuitry **702**. The system bus **706** provides an interface for system components including, but not limited to, the memory **704** and the processing circuitry **702**. The processing circuitry **702** may be or comprise the processing circuitry **110** of the computer system **100** introduced with reference to **FIG. 1,** and/or the processing circuitry **21** of the steering system **20** introduced with reference to **FIG. 2A**. The processing circuitry **702** may include any number of hardware components for conducting data or signal processing or for executing computer code stored in memory **704**. The processing circuitry **702** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **702** may further include computer executable code that controls operation of the programmable device.

The system bus **706** may be any of several types of bus structures that may further interconnect to a memory bus (with or without a memory controller), a peripheral bus, and/or a local bus using any of a variety of bus architectures. The memory **704** may be one or more devices for storing data and/or computer code for completing or facilitating methods described herein. The memory **704** may include database components, object code components, script components, or other types of information structure for supporting the various activities herein. Any distributed or local memory device may be utilized with the systems and methods of this description. The memory **704** may be communicably connected to the processing circuitry **702** (e.g., via a circuit or any other wired, wireless, or network connection) and may include computer code for executing one or more processes described herein. The memory **704** may include non-volatile memory **708** (e.g., read-only memory (ROM), erasable programmable read-only memory (EPROM), electrically erasable programmable read-only memory (EEPROM), etc.), and volatile memory **710** (e.g., random-access memory (RAM)), or any other medium which can be used to carry or store desired program code in the form of machine-executable instructions or data structures and which can be accessed by a computer or other machine with processing circuitry **702**. A basic input/output system (BIOS) **712** may be stored in the non-volatile memory **708** and can include the basic routines that help to transfer information between elements within the computer system **700.**

The computer system **700** may further include or be coupled to a non-transitory computer-readable storage medium such as the storage device **714,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **714** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **714** and/or in the volatile memory **710,** which may include an operating system **716** and/or one or more program modules **718**. All or a portion of the examples disclosed herein may be implemented as a computer program **720** stored on a transitory or non-transitory computer-usable or computer-readable storage medium (e.g., single medium or multiple media), such as the storage device **714,** which includes complex programming instructions (e.g., complex computer-readable program code) to cause the processing circuitry **702** to carry out actions described herein. Thus, the computer-readable program code of the computer program **720** can comprise software instructions for implementing the functionality of the examples described herein when executed by the processing circuitry **702**. In some examples, the storage device **714** may be a computer program product (e.g., readable storage medium) storing the computer program **720** thereon, where at least a portion of a computer program **720** may be loadable (e.g., into a processor) for implementing the functionality of the examples described herein when executed by the processing circuitry **702**. The processing circuitry **702** may serve as a controller or control system for the computer system **700** that is to implement the functionality described herein.

The computer system **700** may include an input device interface **722** configured to receive input and selections to be communicated to the computer system **700** when executing instructions, such as from a keyboard, mouse, touch-sensitive surface, etc. Such input devices may be connected to the processing circuitry **702** through the input device interface **722** coupled to the system bus **706** but can be connected through other interfaces, such as a parallel port, an Institute of Electrical and Electronic Engineers (IEEE) 1394 serial port, a Universal Serial Bus (USB) port, an IR interface, and the like. The computer system **700** may include an output device interface **724** configured to forward output, such as to a display, a video display unit (e.g., a liquid crystal display (LCD) or a cathode ray tube (CRT)). The computer system **700** may include a communications interface **726** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

**Claims**

1. A computer system (100) comprising processing circuitry (110) configured to:

   obtain an articulation angle ($\alpha$) of an articulated vehicle (10) and a velocity (v) of the articulated vehicle (10), wherein the articulation angle ($\alpha$) is controlled by a steering input unit, SIU, (25) of a steering system (20) of the articulated vehicle (10), responsive to the articulation angle ($\alpha$) deviating from 0°:

   determine an angular speed ($\omega$) for controlling the articulation angle ($\alpha$) towards 0° based on the articulation angle ($\alpha$) and a magnitude (s) of the velocity (v) such that a direction (d) of the velocity (v) is maintained, determine a steer-to-center torque (231) for controlling the articulation angle ($\alpha$) towards 0° based on the angular speed ($\omega$), and provide the steer-to-center torque (231) to the steering system (20) for control of the articulation angle ($\alpha$).

2. The computer system (100) of claim 1, wherein the SIU (25) is a SIU of the articulated vehicle (10).

3. The computer system (100) of claim 1 or 2, wherein the steering system (20) is a steer-by-wire, SbW, steering system (20).

4. The computer system (100) of any one of claims 1 to 3, further comprising the steering system (20).

5. The computer system (100) of claim 4, wherein the processing circuitry (110) is further configured to: control a haptic feedback of the SIU (25) based on the steer-to-center torque (231).

6. The computer system (100) of claim 4 or 5, wherein the processing circuitry (110) is further configured to: control a hydraulic steering actuator (23) of the steering system (20) based on the steer-to-center torque (231).

7. The computer system (100) of any one of claims 4 to 6, wherein the processing circuitry (110) is further configured to:

   obtain a wanted articulation angle ($\beta$) of the articulated vehicle (10), from the SIU (25), and determine a wanted articulation torque (251) for controlling the articulation angle ($\alpha$) towards the wanted articulation angle ($\beta$).

8. The computer system (100) of claim 7, wherein the processing circuitry (110) is further configured to: control the articulation angle ($\alpha$) by applying the wanted articulation torque (251) and the steer-to-center torque (231) to a steering actuator of the steering system (20).

**9.** The computer system (100) of claim 1, further comprising the steering system (20), wherein the SIU (25) is a SIU of the articulated vehicle (10), the steering system (20) is a steer-by-wire, SbW, steering system (20), wherein the processing circuitry (110) is further configured to: control a haptic feedback of the SIU (25) based on the steer-to-center torque (231); control a hydraulic steering actuator (23) of the steering system (20) based on the steer-to-center torque (231); obtain a wanted articulation angle ($\beta$) of the articulated vehicle (10), from the steering input unit, SIU, (25), and determine a wanted articulation torque (251) for controlling the articulation angle ($\alpha$) towards the wanted articulation angle ($\beta$); and control the articulation angle ($\alpha$) by applying the wanted articulation torque (251) and the steer-to-center torque (231) to a steering actuator of the steering system (20).

**10.** An articulated vehicle (10) comprising a steering system (20) and the computer system (100) according to any one of claims 1 to 9.

**11.** The articulated vehicle (10) of claim 10, wherein the articulated vehicle (10) is a heavy-duty vehicle.

**12.** The articulated vehicle (10) of claim 10 or 11, wherein the steering system (20) is a hydraulic steering system (20) and the articulated vehicle (10) is a SbW vehicle.

**13.** A computer implemented method (300) comprising:

obtaining (310), by processing circuitry (110) of a computer system (100), an articulation angle ($\alpha$) of an articulated vehicle (10) and a velocity (v) of the articulated vehicle (10), wherein the articulation angle ($\alpha$) is controlled by a SIU, (25) of a steering system (20) of the articulated vehicle (10),
responsive to the articulation angle ($\alpha$) deviating from 0°:

determining (320), by processing circuitry (110) of the computer system (100), an angular speed ($\omega$) for controlling the articulation angle ($\alpha$) towards 0° based on the articulation angle ($\alpha$) and a magnitude (s) of the velocity (v) such that a direction (d) of the velocity (v) is maintained,
determining (330), by processing circuitry (110) of the computer system (100), a steer-to-center torque (231) for controlling the articulation angle ($\alpha$) towards 0° based on the angular speed ($\omega$), and
providing (340), by processing circuitry (110) of the computer system (100), the steer-to-center torque (231) to the steering system (20) for control of the articulation angle ($\alpha$).

**14.** A computer program product (400) comprising program code (610) for performing, when executed by a processing circuitry (110), the method of claim 13.

**15.** A non-transitory computer-readable storage medium (500) comprising instructions, which when executed by a processing circuitry (110), cause the processing circuitry (110) to perform the method of claim 13.

**Patentansprüche**

**1.** Computersystem (100), umfassend Verarbeitungsschaltung (110) die zu Folgendem konfiguriert ist:

Erlangen eines Gelenkwinkels ($\alpha$) eines Gelenkfahrzeugs (10) und einer Geschwindigkeit (v) des Gelenkfahrzeugs (10), wobei der Gelenkwinkel ($\alpha$) durch eine Lenkeingangseinheit, SIU, (25) eines Lenksystems (20) des Gelenkfahrzeugs (10) gesteuert wird,
als Reaktion, dass der Gelenkwinkel ($\alpha$) von 0° abweicht:

Bestimmen einer Winkelgeschwindigkeit ($\omega$) zum Steuern des Gelenkwinkels ($\alpha$) in Richtung 0° basierend auf dem Gelenkwinkel ($\alpha$) und einer Größe (s) der Geschwindigkeit (v), sodass eine Richtung (d) der Geschwindigkeit (v) beibehalten wird,
Bestimmen eines Lenkungsmittigstellungmoments (231) zum Steuern des Gelenkwinkels ($\alpha$) in Richtung 0° basierend auf der Winkelgeschwindigkeit ($\omega$), und
Bereitstellen des Lenkungsmittigstellungmoments (20) an das Lenksystem (231) zum Steuern des Gelenkwinkels ($\alpha$).

**2.** Computersystem (100) nach Anspruch 1, wobei die SIU (25) eine SIU des Gelenkfahrzeugs (10) ist.

**3.** Computersystem (100) nach Anspruch 1 oder 2, wobei das Lenksystem (20) ein Lenksystem (20) mit Steer-by-Wire-Verbindung, SbW, ist.

**4.** Computersystem (100) nach einem der Ansprüche 1 bis 3, ferner umfassen das Lenksystem (20).

**5.** Computersystem (100) nach Anspruch 4, wobei die Verarbeitungsschaltung (110) ferner zu Folgendem konfiguriert ist:
Steuern eines haptischen Feedback der SIU (25) basierend auf dem Lenkungsmittigstellungmoment (231).

6. Computersystem (100) nach Anspruch 4 oder 5, wobei die Verarbeitungsschaltung (110) ferner zu Folgendem konfiguriert ist:
Steuern eines hydraulischen Lenkaktuators (23) des Lenksystems (20) basierend auf dem Lenkungsmittigstellungmoment (231).

7. Computersystem (100) nach einem der Ansprüche 4 bis 6, wobei die Verarbeitungsschaltung (110) ferner zu Folgendem konfiguriert ist:

   Erlangen eines erwünschten Gelenkwinkel ($\beta$) des Gelenkfahrzeugs (10) von der SIU (25), und Bestimmen eines gewünschten Gelenkdrehmoments (251) zum Steuern des Gelenkwinkels ($\alpha$) in Richtung des erwünschten Gelenkwinkels ($\beta$).

8. Computersystem (100) nach Anspruch 7, wobei die Verarbeitungsschaltung (110) ferner zu Folgendem konfiguriert ist:
Steuern des Gelenkwinkels ($\alpha$) durch Anwenden des gewünschten Gelenkdrehmoments (251) und des Lenkungsmittigstellungmoments (231) auf einen Lenkaktuator des Lenksystems (20).

9. Computersystem (100) nach Anspruch 1, ferner umfassend das Lenksystem (20), wobei die SIU (25) eine SIU des Gelenkfahrzeugs (10) ist, das Lenksystem (20) ein Lenksystem (20) mit Steer-by-Wire-Verbindung, SbW, ist, wobei die Verarbeitungsschaltung (110) ferner zu Folgendem konfiguriert ist:
Steuern eines haptischen Feedbacks der SIU (25) basierend auf dem Lenkungsmittigstellungmoment (231); Steuern eines hydraulischen Lenkaktuators (23) des Lenksystems (20) basierend auf dem Lenkungsmittigstellungmoment (231); Erlangen eines erwünschten Gelenkwinkels ($\beta$) des Gelenkfahrzeugs (10) von der Lenkeingangseinheit SIU (25) und Bestimmen eines erwünschten Gelenkdrehmoments (251), um den Gelenkwinkel ($\alpha$) in Richtung des erwünschten Gelenkwinkels ($\beta$) zu steuern; und Steuern des Gelenkwinkels ($\alpha$) durch Anwenden des erwünschten Gelenkdrehmoments (251) und des Lenkungsmittigstellungmoment (231) auf einen Lenkaktuator des Lenksystems (20).

10. Gelenkfahrzeug (10), umfassend ein Lenksystem (20) und das Computersystem (100) nach einem der Ansprüche 1 bis 9.

11. Gelenkfahrzeug (10) nach Anspruch 10, wobei das Gelenkfahrzeug (10) ein Schwerlastfahrzeug ist.

12. Gelenkfahrzeug (10) nach Anspruch 10 oder 11, wobei das Lenksystem (20) ein hydraulisches Lenksystem (20) ist und das Gelenkfahrzeug (10) ein SbW-Fahrzeug ist.

13. Computerimplementiertes Verfahren (300), umfassend:

    Erlangen (310), durch Verarbeitungsschaltung (110) eines Computersystems (100), eines Gelenkwinkels ($\alpha$) eines Gelenkfahrzeugs (10) und einer Geschwindigkeit (v) des Gelenkfahrzeugs (10), wobei der Gelenkwinkel ($\alpha$) durch eine SIU, (25) eines Lenksystems (20) des Gelenkfahrzeugs (10) gesteuert wird, als Reaktion, dass der Gelenkwinkel ($\alpha$) von 0° abweicht:

    Bestimmen (320), durch Verarbeitungsschaltung (110) eines Computersystems (100), einer Winkelgeschwindigkeit ($\omega$) zum Steuern des Gelenkwinkels ($\alpha$) in Richtung 0° basierend auf dem Gelenkwinkel ($\alpha$) und einer Größe (s) der Geschwindigkeit (v), sodass eine Richtung (d) der Geschwindigkeit (v) beibehalten wird, Bestimmen (330), durch Verarbeitungsschaltung (110) eines Computersystems (100), eines Lenkungsmittigstellungmoments (231) zum Steuern des Gelenkwinkels ($\alpha$) in Richtung 0° basierend auf der Winkelgeschwindigkeit ($\omega$), und Bereitstellen (340), durch Verarbeitungsschaltung (110) des Computersystems (100), des Lenkungsmittigstellungmoments (231) an das Lenksystem (20) zum Steuern des Gelenkwinkels ($\alpha$).

14. Computerprogrammprodukt (400), umfassend Programmcode (610), um das Verfahrens von Anspruch 13 durchzuführen, wenn er durch eine Verarbeitungsschaltung (110) ausgeführt wird.

15. Nicht-transitorisches, computerlesbares Speichermedium (500), umfassend Anweisungen, die, wenn sie von einer Verarbeitungsschaltung (110) ausgeführt werden, die Verarbeitungsschaltung (110) veranlassen, das Verfahren von Anspruch 13 durchzuführen.

**Revendications**

1. Système informatique (100) comprenant un circuit de traitement (110) configuré pour :

   obtenir un angle d'articulation ($\alpha$) d'un véhicule articulé (10) et une vitesse (v) du véhicule articulé (10), dans lequel l'angle d'articulation ($\alpha$) est commandé par une unité d'entrée de direction (SIU) (25) d'un système de direction (20) du véhicule articulé (10), en réponse à l'angle d'articulation ($\alpha$) qui s'é-

carte de 0° :

déterminer une vitesse angulaire (ω) pour commander l'angle d'articulation (α) vers 0 ° en fonction de l'angle d'articulation (α) et d'une magnitude (s) de la vitesse (v), de sorte qu'une direction (d) de la vitesse (v) soit maintenue,
déterminer un couple de recentrage (231) pour commander l'angle d'articulation (α) vers 0° sur la base de la vitesse angulaire (ω), et
fournir au système de direction (20) le couple de recentrage (231) pour commander l'angle d'articulation (α).

2. Système informatique (100) selon la revendication 1, dans lequel le SIU (25) est un SIU du véhicule articulé (10).

3. Système informatique (100) selon la revendication 1 ou 2, dans lequel le système de direction (20) est un système de direction par câble (SbW) (20).

4. Système informatique (100) selon l'une quelconque des revendications 1 à 3, comprenant en outre le système de direction (20).

5. Système informatique (100) selon la revendication 4, dans lequel le circuit de traitement (110) est en outre configuré pour :
commander un retour haptique du SIU (25) en fonction du couple de recentrage (231).

6. Système informatique (100) selon la revendication 4 ou 5, dans lequel le circuit de traitement (110) est en outre configuré pour :
commander un actionneur hydraulique de direction (23) du système de direction (20) sur la base du couple de recentrage (231).

7. Système informatique (100) selon l'une quelconque des revendications 4 à 6, dans lequel le circuit de traitement (110) est en outre configuré pour :

obtenir un angle d'articulation souhaité (β) du véhicule articulé (10), à partir du SIU (25), et
déterminer un couple d'articulation souhaité (251) pour commander l'angle d'articulation (α) vers l'angle d'articulation souhaité (β).

8. Système informatique (100) selon la revendication 7, dans lequel le circuit de traitement (110) est en outre configuré pour :
commander l'angle d'articulation (α) en appliquant le couple d'articulation souhaité (251) et le couple de recentrage (231) à un actionneur de direction du système de direction (20).

9. Système informatique (100) selon la revendication 1, comprenant en outre le système de direction (20), dans lequel le SIU (25) est un SIU du véhicule articulé (10), le système de direction (20) est un système de direction par câble (SbW) (20), dans lequel le circuit de traitement (110) est en outre configurée pour : commander un retour haptique du SIU (25) en fonction du couple de recentrage (231) ; commander un actionneur hydraulique de direction (23) du système de direction (20) en fonction du couple de recentrage (231) ; obtenir un angle d'articulation souhaité (β) du véhicule articulé (10), à partir de l'unité d'entrée de direction (SIU) (25), et déterminer un couple d'articulation souhaité (251) pour commander l'angle d'articulation (α) vers l'angle d'articulation souhaité (β) ; et commander l'angle d'articulation (α) en appliquant le couple d'articulation souhaité (251) et le couple de recentrage (231) à un actionneur de direction du système de direction (20).

10. Véhicule articulé (10) comprenant un système de direction (20) et le système informatique (100) selon l'une quelconque des revendications 1 à 9.

11. Véhicule articulé (10) selon la revendication 10, dans lequel le véhicule articulé (10) est un véhicule utilitaire lourd.

12. Véhicule articulé (10) selon la revendication 10 ou 11, dans lequel le système de direction (20) est un système de direction hydraulique (20) et le véhicule articulé (10) est un véhicule SbW.

13. Procédé mis en œuvre par ordinateur (300) comprenant :

l'obtention (310), par le circuit de traitement (110) d'un système informatique (100), d'un angle d'articulation (α) d'un véhicule articulé (10) et d'une vitesse (v) du véhicule articulé (10), dans lequel l'angle d'articulation (α) est commandé par un SIU (25) d'un système de direction (20) du véhicule articulé (10),
en réponse à l'angle d'articulation (α) qui s'écarte de 0° :

détermination (320), par le circuit de traitement (110) du système informatique (100), d'une vitesse angulaire (ω) pour commander l'angle d'articulation (α) vers 0° en fonction de l'angle d'articulation (α) et d'une magnitude (s) de la vitesse (v), de sorte qu'une direction (d) de la vitesse (v) soit maintenue,
détermination (330), par le circuit de traitement (110) du système informatique (100), d'un couple de recentrage (231) pour commander l'angle d'articulation ($\alpha$) vers 0° sur la base de la vitesse angulaire (w), et fourniture (340), par le circuit de traitement (110) du système informatique (100), du couple de recentrage (231) au système de direction (20) pour commander l'angle d'articulation ($\alpha$).

**14.** Produit de programme informatique (400) comprenant un code de programme (610) pour réaliser, lorsqu'il est exécuté par un circuit de traitement (110), le procédé selon la revendication 13.

**15.** Support de stockage non transitoire lisible par ordinateur (500) comprenant des instructions qui, lorsqu'elles sont exécutées par un circuit de traitement (110), amènent le circuit de traitement (110) à réaliser le procédé selon la revendication 13.

FIG. 1

FIG. 2A

FIG. 2B

FIG. 3A

FIG. 3B

FIG. 4

FIG. 5A

FIG. 5B

FIG. 5C

Fig. 6A

Fig. 6B

Fig. 6C

Fig. 7

Fig. 8

Fig. 9

Fig. 10

Fig. 11

Fig. 12

**FIG. 13**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016280260 A